# EUROPÄISCHE PATENTSCHRIFT

(11) **EP 2 943 701 B1**
(45) Veröffentlichungstag und Bekanntmachung des Hinweises auf die Patenterteilung: **08.08.2018**
(21) Anmeldenummer: 13821491.1
(22) Anmeldetag: 27.12.2013
(51) Int. Cl.: F16H 57/021

(54) **WELLENANLAUFANORDNUNG SOWIE STELLANTRIEB**
SHAFT THRUST ARRANGEMENT AND ACTUATING DRIVE
SYSTÈME DE DÉMARRAGE D'ARBRE AINSI QUE MÉCANISME DE COMMANDE

(30) Priorität: 08.01.2013 DE 102013200130
(43) Veröffentlichungstag der Anmeldung: 18.11.2015
(73) Patentinhaber: Robert Bosch GmbH, 70442 Stuttgart (DE)
(72) Erfinder: WEHRLE, Andreas, 77770 Durbach (DE)
(86) Internationale Anmeldenummer: PCT/EP2013/078037
(87) Internationale Veröffentlichungsnummer: WO 2014/108317

(56) Entgegenhaltungen:
- EP-A1- 0 133 527
- EP-A2- 0 082 375
- DE-A1- 4 137 607
- GB-A- 2 356 910

## Beschreibung

### Stand der Technik

Die Erfindung betrifft eine Wellenanlaufanordnung nach dem Oberbegriff des Anspruchs 1. Ferner betrifft die Erfindung einen Stellantrieb unter Verwendung einer erfindungsgemäßen Wellenanlaufanordnung. So eine Wellenanlaufanordnung ist aus der GB2356910A bekannt. Eine Wellenanlaufanordnung ist aus der DE 10 2007 023 389 A1 der Anmelderin bekannt. Die bekannte Wellenanlaufanordnung findet insbesondere Verwendung als Bestandteil in einem elektrischen Antrieb in Form eines Stellantriebs in einem Kraftfahrzeug, z.B. in einem Fensterheberantrieb, einem Schiebedachantrieb, einem Sitzverstellungsantrieb oder Ähnlichem. Ein Erfordernis eines derartigen Stellantriebs ist es, dass dieser unter einer definierten Last und im Stillstand in seiner Position verharrt, um eine nicht gewünschte Verstellung der Fensterscheibe, des Schiebedachs, des Sitzes oder Ähnlichem zu vermeiden. In diesem Zustand ist der elektrische Antrieb des Stellantriebs stromlos geschaltet. Der größte Anteil der Hemmung wird dabei über die Getriebestufe bzw. bei mehrstufigen Getrieben über die Getriebestufen im Stellantrieb erzeugt. Die geforderte Hemmung im Getriebe macht es erforderlich, dass zum Betreiben des Stellantriebs, d.h. zum Verstellen der Fensterscheibe, des Schiebedachs, des Sitzes oder Ähnlichem ein relativ starker elektrischer Antrieb verwendet werden muss. Mit einem besseren Wirkungsgrad des Getriebes kann der erforderliche Leistungsbedarf bzw. die Baugröße des elektrischen Antriebs verringert werden, was unter anderem in gewünschter Art und Weise zu einem leichteren Stellantrieb führt. Trotzdem ist es erforderlich, dass der Stellantrieb die gewünschte Hemmung erzeugt. Bei der aus der DE 10 2007 023 389 A1 bekannten Wellenanlaufanordnung ist die Anlauffläche zwischen dem Wellenende und seinem ortsfest angeordneten Abstützelement ringförmig ausgebildet. Mittels einer derartigen Anordnung lässt sich im Vergleich zu einer punktförmigen Anlage des Wellenendes eine relativ große Reibfläche, und somit bei einer vorgegebenen Axialkraft auf die Welle gegenüber einer punktuellen Anlage eine erhöhte Selbsthemmung erzielen. Dabei wird durch die konstante Größe der Anlauffläche über die Axialkraft betrachtet ein zumindest nahezu linearer Verlauf des Hemmmomentes erzielt wird. Es kann zwar somit durch die relativ große Anlauffläche bereits bei einer relativ geringen Axialkraft ein relativ hohes Hemmmoment erzielt werden, die Überwindung dieses Hemmmomentes im Betriebsfall durch den elektrischen Antrieb erfordert jedoch wiederum einen relativ großen Antrieb, was aufgrund der oben genannten Zusammenhänge nicht erwünscht ist.

Mit der EP0082375A2 ist ein Fensterheberantrieb bekannt geworden, bei dem die Axialspieleinstellung der Ankerwelle mittels einer Stellschraube erfolgt, die mit einer axialen ringförmigen Anlauffläche direkt am Ankerwellenende anliegt.

### Offenbarung der Erfindung

Ausgehend von dem dargestellten Stand der Technik liegt der Erfindung die Aufgabe zugrunde, eine Wellenanlaufanordnung nach dem Oberbegriff des Anspruchs 1 derart weiterzubilden, dass einerseits relativ hohe Hemmmomente erzielt werden können, wenn entsprechend große Axialkräfte auf die Welle wirken, andererseits jedoch eine möglichst geringe Leistung des elektrischen Antriebs zum Antreiben des mit der Wellenanlaufanordnung versehenen Stellantriebs benötigt werden. Diese Aufgabe wird erfindungsgemäß bei einer Wellenanlaufanordnung mit den Merkmalen des Anspruchs 1 dadurch gelöst, dass die Größe der Anlauffläche in Abhängigkeit von der über das Wellenende auf die Anlauffläche wirkenden Axialkraft veränderbar ist, derart, dass eine Erhöhung der Axialkraft eine Vergrößerung der Anlauffläche bewirkt. Eine derartige, erfindungsgemäße Ausbildung der Anlauffläche ermöglicht es somit, eine progressive Kennlinie des Hemmmoments zu erzielen, bei der bei relativ geringen Axialkräften, die auf die Welle wirken, lediglich relativ geringe Hemmmomente erzielt werden, während relativ hohe Axialkräfte zu überproportional großen Hemmmomenten führen.
Um eine über die Höhe der Axialkraft sich verändernde, bei höherer Axialkraft vergrößerte Anlauffläche auszubilden, ist es erfindungsgemäß vorgesehen, dass die Anlauffläche an einem elastisch deformierbaren Element ausgebildet ist, wobei das Element in einer Aufnahme für das Element vorzugsweise drehfest aufgenommen ist, und das sich in der Aufnahme axial abstützt. Ein derartiges, elastisch deformierbares Element ermöglicht es, dass eine in Abhängigkeit von der Höhe der Axialkraft sich ändernde Deformation des Elements erzielt wird, wodurch bei einer Erhöhung der Axialkraft ein größerer Bereich des deformierbaren Elements in Wirkverbindung mit dem Wellenende der Welle gelangt und es somit zu einer Vergrößerung der Anlauffläche kommt. Erfindungsgemäß wird vorgeschlagen, dass die Anlauffläche konzentrisch zu der Längsachse der Welle angeordnet ist und Flächenabschnitte aufweist, die kreis- und/oder ringförmig ausgebildet sind, und die durch Erhöhung der Axialkraft zwischen dem deformierbaren Element und dem Wellenende ausgebildet werden. Damit ist es insbesondere beispielsweise möglich, eine Kennlinie des Hemmmoments zu erzeugen, bei der bei einer Erhöhung der Axialkraft auf die Welle das Hemmmoment zunächst einen linear steigenden Verlauf aufweist, solange das Wellenende beispielsweise in Wirkverbindung mit lediglich einem einzigen, ringförmigen Flächenabschnitt angeordnet ist. Bei weiter steigender Axialkraft auf die Welle gelangt das Wellenende in Wirkverbindung mit einem zusätzlichen, zweiten ringförmigen Flächenabschnitt, was die Kennlinie dahingehend ändert, dass ein überproportionaler Anstieg des Hemmmoments durch Zuschaltung der zweiten Anlauffläche erzielt wird.

Vorteilhafte Weiterbildungen der erfindungsgemäßen Wellenanlaufanordnung sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Konkret wird insbesondere vorgeschlagen, dass die Abstände zwischen den Flächenabschnitten der Anlauffläche und dem Wellenende zumindest bei mit Axialkraft unbelasteter Welle unterschiedlich groß sind, und dass sich die Abstände bei einer Erhöhung der Axialkraft auf die Welle verringern.

Konkret kann es dabei vorgesehen sein, dass das Element auf der dem Wellenende zugewandten Seite einen ersten Flächenabschnitt aufweist, der radial von wenigstens einem zweiten Flächenabschnitt umgeben ist. Das Maß der Progression der Kennlinie des Hemmmoments, d.h. die Charakteristik des zunehmendem Hemmmoments bei Vergrößerung der Anlauffläche lässt sich dabei vorteilhaft einstellen, wenn der Abstand des ersten Flächenabschnittes zum Wellenende bei mit Axialkraft unbelasteter Welle geringer ist als der Abstand des zweiten Flächenabschnitts zum Wellenende. Damit wird der Effekt erzielt, dass zunächst ein erster Flächenabschnitt, der einen relativ geringen radialen Abstand zur Längsachse der Welle aufweist, in Wirkverbindung mit dem Wellenende gelangt, so dass ein zunächst relativ geringes Hemmmoment erzielt wird. Bei einer Erhöhung der Axialkraft gelangt dann anschließend zusätzlich ein zweiter Flächenabschnitt, der den ersten Flächenabschnitt radial umgibt und somit einen größeren radialen Abstand zur Längsachse der Welle aufweist als der erste Flächenabschnitt, in Wirkverbindung mit dem Wellenende, wodurch sich aufgrund des größeren radialen Abstands zur Längsachse der Welle ein zusätzliches, relativ hohes Hemmmoment erzielen lässt, so dass die Steigung der Kennlinie des Hemmmoments über der Axialkraft betrachtet überproportional, das heißt progressiv zunimmt.

Eine weitere konstruktive Ausgestaltung der erfinderischen Idee sieht vor, dass das elastisch deformierbare Element zweiteilig ausgebildet ist und ein in der Längsachse der Welle angeordnetes zentrales, insbesondere stiftförmiges erstes Teilelement aufweist, das aus einem anderen Material besteht als das das erste Teilelement (radial) umgebende zweite Teilelement. Dadurch wird es ermöglicht, durch unterschiedliche Materialien für die beiden Teilelemente über deren unterschiedliche Reibwerte, zusätzlich zur Beeinflussung über die Größe der Flächenabschnitte, unterschiedliche Hemmmomente zu erzeugen. Insbesondere kann es dabei auch vorgesehen sein, dass das erste, zentrale Element, das üblicherweise über einen längeren Zeitraum über der Lebensdauer des Stellantriebs betrachtet mit dem Wellenende in Wirkverbindung ist, aus einem besonders verschleißfesten Material besteht, während das das erste Teilelement radial umgebende zweite Teilelement aus einem Material besteht, das zwar weniger verschleißfest ausgebildet ist, jedoch einen gegenüber dem ersten Material höheren Reibwert aufweist. Dadurch wird im Anwendungsfall, bei dem die Axialkräfte über das Wellenende auf das Element einwirken, bei einer Erhöhung der Axialkraft ein zusätzliches progressives Verhalten der Kennlinie des Hemmmoments ermöglicht.

Um eine Beschädigung bzw. Überlastung insbesondere des zweiten Teilelements zu vermeiden, ist es in einer weiteren Ausgestaltung der Erfindung vorgesehen, dass das erste Teilelement auf der dem Wellenende abgewandten Seite zum Grund der Aufnahme beabstandet angeordnet ist, und dass das erste Teilelement bei Überschreitung einer bestimmten Axialkraft auf die Welle in Anlage mit dem Grund der Aufnahme gelangt. Dadurch wirkt das erste Teilelement gleichzeitig als Anschlagelement, so dass eine weitere Erhöhung der Axialkraft nicht zu einer Vergrößerung der Anlauffläche führt und damit das zweite Teilelement vor Beschädigungen schützt.

Um die benötigte Deformation des elastisch deformierbaren Elements zu ermöglichen bzw. zu vereinfachen, ist es darüber hinaus in einer weiteren Ausgestaltung der Erfindung vorgesehen, dass das Element in einem zentralen Bereich des Elements zumindest bei mit Axialkraft unbelasteter Welle zum Grund der Aufnahme beabstandet angeordnet ist.

Die Erfindung umfasst auch einen Stellantrieb, insbesondere in einem Kraftfahrzeug, mit einer erfindungsgemäßen Anlaufanordnung, bei dem die Welle eine abschnittsweise als Getriebeschnecke ausgebildete Ankerwelle eines elektrischen, insbesondere drehrichtungsumkehrbaren Antriebsmotors ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine unvollständige, schematische Darstellung einer Fensterhebereinrichtung mit einem eine Wellenanlaufanordnung aufweisenden Stellantrieb,
- Fig. 2 bis Fig. 6: jeweils unterschiedliche Varianten einer erfindungsgemäßen Wellenanlaufanordnung, jeweils im Längsschnitt, und
- Fig. 7: eine typische Kennlinie des Hemmmoments über dem Verlauf der Axialkraft auf die Welle bei einer erfindungsgemäßen Wellenanlaufanordnung.

Gleiche Elemente bzw. Elemente mit gleicher Funktion sind in den Figuren mit den gleichen Bezugsziffern versehen.

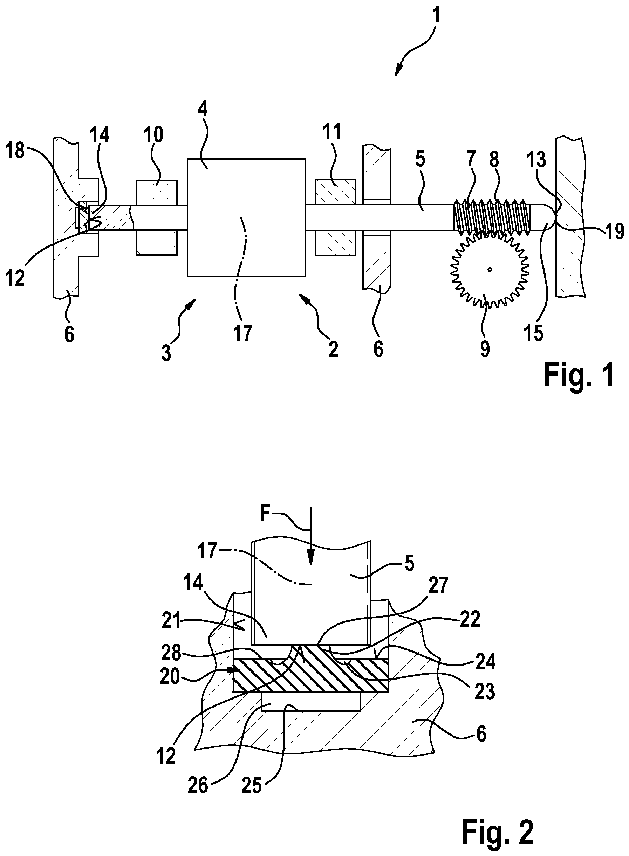

In der Fig. 1 ist stark vereinfacht ein Stellantrieb 1 einer Fensterhebereinrichtung 2 in einem Kraftfahrzeug dargestellt. Der Stellantrieb 1 umfasst einen drehrichtungsumkehrbaren elektrischen Antriebsmotor 3 mit einem Motoranker 4, der drehfest auf einer Welle 5 angeordnet ist. Weitere Komponenten des Antriebsmotors 3, wie in einem ausschnittsweise dargestellten Polgehäuse 6 angeordnete Permanentmagnete, sowie eine Kommutierungseinrichtung sind aus Übersichtlichkeitsgründen in der Fig. 1 nicht dargestellt. Die Welle 5 ist in einem außerhalb des Polgehäuses 6 liegenden Abschnitts als Getriebeschnecke 7 mit einem Schneckengewinde 8 ausgebildet. Das Schneckengewinde 8 kämmt mit einen Schneckenrad 9, das mit der zu verstellenden, nicht dargestellten Fensterscheibe in einer Kraftfahrzeugtür, insbesondere mittels eines Seilzugs, wirkverbunden angeordnet ist.

Wie sich aus der Fig. 1 ergibt, ist die Welle 5 fliegend gelagert. Zur radialen Lagerung der Welle 5 ist benachbart zu jeweils einer axialen Seite des Motorankers 4 ein Radiallager 10, 11 angeordnet. Die den Motoranker 4 einrahmenden Radiallager 10, 11 ermöglichen eine axiale Verstellung der Welle 5 in den Grenzen zweier in axialer Richtung beabstandeter Anlaufflächen 12, 13. Je nach Drehrichtung des Antriebsmotors 4 stützt sich die Welle 5 entweder mit ihrem in der linken Zeichnungshälfte angeordneten axialen ersten Endabschnitt 14 an der ersten Anlauffläche 12, oder mit ihrem in der rechten Zeichnungshälfte angeordneten zweiten Endabschnitt 15 an der zweiten Anlauffläche 13 außerhalb des Polgehäuses 6 ab. Während der eine Endabschnitt 14 der Welle 5 in dem in der Fig. 1 dargestellten Ausführungsbeispiel eine senkrecht zur Längsachse 17 der Welle 5 angeordnete ebene Stirnfläche 18 aufweist, ist der andere Endabschnitt 15 durch eine ballige, d.h. konvex ausgebildete Stirnseite 19 gebildet.

Die an einem Getriebegehäuse ausgebildete zweite Anlauffläche 13 verläuft exakt senkrecht zur der Längsachse 17 der Welle 5 und ist eben ausgebildet, so dass sich die Welle 5 näherungsweise punktförmig (kreisförmig) im Bereich der Längsachse 17 in axialer Richtung bei entsprechender Drehrichtung des Antriebsmotors 3 an der zweiten Anlauffläche 13 abstützt.

Bei in entgegengesetzter Richtung angetriebenem Antriebsmotor 3 wird eine nicht gezeigte Fensterscheibe angehoben. Dabei stützt sich die Welle 5 an ihrem ersten axialen Endabschnitt 14 an der ersten Anlauffläche 12 ab.

Wie insbesondere anhand einer Zusammenschau der Fig. 1 und 2 erkennbar ist, ist die erste Anlauffläche 12 an einem Element 20 ausgebildet, das in einer Aufnahme 21 des Polgehäuses 6 drehfest aufgenommen ist. Die drehfeste Aufnahme des Elements 20 in der Aufnahme 21 erfolgt beispielsweise durch eine nicht dargestellte Formschlussverbindung zwischen dem Element 20 und der Aufnahme 21, eine mechanische Befestigung, oder durch Verkleben.

Erfindungsgemäß ist es vorgesehen, dass das Element 20 als elastisch deformierbares Element 20 ausgebildet ist. Die elastische Deformierbarkeit des Elements 20 wird durch eine entsprechende Wahl des Materials für das Element 20 und/oder durch eine entsprechende geometrische Ausbildung des Elements 20 ermöglicht. Im dargestellten ersten Ausführungsbeispiel der Erfindung ist das Element 20 zumindest im Wesentlichen scheibenförmig ausgebildet und weist eine in der Längsachse 17 angeordnete, plateauartige Erhöhung 22 auf. Die Welle 5 befindet sich mit ihrem Endabschnitt 14 in Anlagekontakt mit der Erhöhung 22. Die Erhöhung 22 ist konzentrisch zur Längsachse 17 von einer radial umlaufenden Sicke 23 umgeben, in deren Bereich das Element 20 eine verringerte Dicke aufweist. Die Sicke 23 dient neben der Sicherstellung der gewünschten Deformationsfähigkeit des Elements 20 gegebenenfalls zusätzlich der Aufnahme für ein Schmiermittel, insbesondere Fett.

Radial außerhalb der Sicke 23 weist das Element 20 eine konstante Dicke und eine dem Endabschnitt 14 der Welle 5 zugewandte Kontaktfläche 24 auf.

Auf der dem Endabschnitt 14 abgewandten Seite des Elements 20 weist die Aufnahme 21 eine Vertiefung 25 auf, so dass zwischen dem Grund der Vertiefung 25 und der ihr zugewandten Stirnseite des Elements 20 ein Freiraum 26 ausgebildet ist. Erfindungswesentlich ist, dass zwischen dem Element 20 und dem Endabschnitt 14 bei einer Beaufschlagung der Welle 5 mit einer Axialkraft F, in Abhängigkeit von der Größe der Axialkraft F, unterschiedliche Flächenabschnitte 27, 28 der Anlauffläche 12 in Wirkverbindung gelangen, die ein Hemmmoment M_{H} erzeugen, das einer Drehung der Welle 5 entgegenwirkt.

Bei dem in der Fig. 2 dargestellten Zustand, bei dem lediglich eine geringe Axialkraft F auf die Welle 5 in Richtung des Elements 20 wirkt, ist lediglich der eine Flächenabschnitt 27 des Elements 20 mit der Erhöhung 22 in Anlagekontakt mit dem Endabschnitt 14 der Welle 5. Wird hingegen die Axialkraft F erhöht, so wird das elastische Element 20 deformiert, derart, dass der der Erhöhung 22 gegenüberliegende Bereich des Elements 20 in die Vertiefung 25 eintaucht und gleichzeitig die Kontaktfläche 24 des Elements 20 den zweiten Flächenabschnitt 28 der Anlauffläche 12 ausbildet, der mit dem Endabschnitt 14 der Welle 5 in Wirkverbindung gelangt. Die Erhöhung der Axialkraft F bewirkt somit ein "Zuschalten" des zweiten Flächenabschnitts 28 und dadurch eine Vergrößerung der Reibfläche zwischen dem Element 20 und der Welle 5.

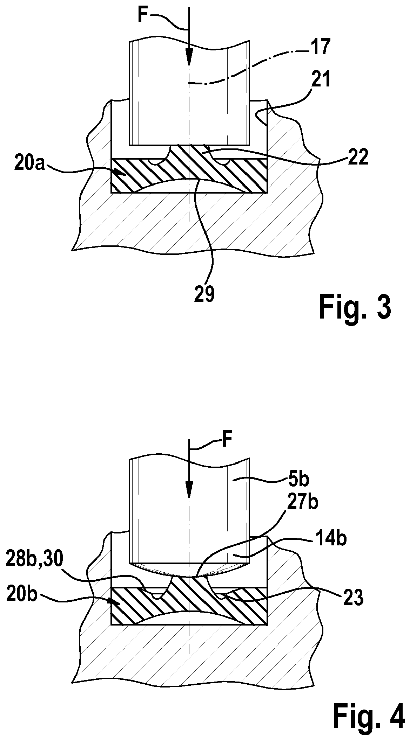

Das in der Fig. 3 dargestellte Element 20a unterscheidet sich von dem Element 20 im Wesentlichen dadurch, dass die Aufnahme 21, in der das Element 20a angeordnet ist, keine Vertiefung 25 aufweist. Stattdessen weist das Element 20a auf der der Erhöhung 22 gegenüberliegenden Seite eine insbesondere sphärisch ausgebildete Ausnehmung 29 auf, deren Funktion der Funktion der Vertiefung 25 bei dem Element 20 entspricht, so dass bei einer Überschreitung einer bestimmten Axialkraft F sich das Element 20a derart verformen kann, dass das Element 20a bzw. die Erhöhung 22 in Richtung des Grunds der Aufnahme 21 bewegt wird.

In der Fig. 4 ist ein weiteres Element 20b dargestellt, das sich von dem Element 20a dadurch unterscheidet, dass das Element 20b in einem die Sicke 23 radial umgebenden Bereich 30 einen konisch ausgebildeten Flächenabschnitt 28b aufweist. Weiterhin ist der Endabschnitt 14b der Welle 5b kuppenartig ausgebildet, so dass zunächst der in der Längsachse 17 angeordnete Flächenabschnitt 27b in Wirkverbindung mit dem Endabschnitt 14b ist, und bei einer Vergrößerung der Axialkraft F der konisch ausgebildete Flächenabschnitt 28b in Wirkverbindung mit dem Endabschnitt 14b gelangt.

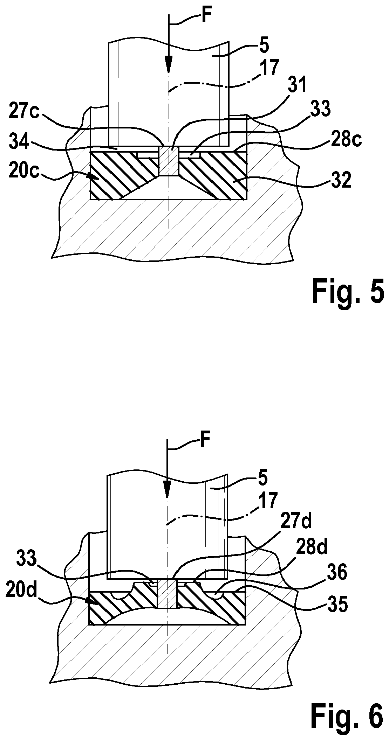

In der Fig. 5 ist ein weiteres Element 20c dargestellt, das zweiteilig ausgebildet ist. Das Element 20c umfasst ein in der Längsachse 17 angeordnetes zentrales, insbesondere stiftförmiges erstes Teilelement 31 und ein das erste Teilelement 31 radial umgebendes, ringförmiges zweites Teilelement 32. Die beiden Teilelemente 31, 32 sind fest miteinander verbunden, z.B. durch eine Verklebung, durch Einpressen oder ähnliches, wobei wesentlich ist, dass das erste Teilelement 31 aus einem anderen Material besteht als das zweite Teilelement 32. Insbesondere kann das erste Teilelement 31 aus einem gegenüber dem zweiten Teilelement 32 verschleißfesteren Material bestehen. Die der Welle 5 abgewandte Seite des ersten Teilelements 31 ist beabstandet zum Grund der Aufnahme 21 angeordnet und wirkt somit als Anschlagelement, um eine Deformation bzw. Bewegung des Elements 20c zu beschränken. Die Welle 5 ist eben ausgebildet, ebenso wie die der Welle 5 zugewandte Stirnseite des ersten Teilelements 31, die einen ersten Flächenabschnitt 27c der Anlauffläche 12 ausbildet. Unmittelbar an das erste Teilelement 31 schließt sich eine radial umlaufende Vertiefung 33 an, die wiederum in einen zweiten Flächenabschnitt 28c des zweiten Teilelements 32 übergeht, wobei der zweite Flächenabschnitt 28c eine ebene Stirnfläche aufweist. Die der Anlauffläche 12 zugewandte Stirnfläche des ersten Teilelements 31 überragt den Flächenabschnitt 28c des zweiten Teilelements 32, so dass bei geringer Belastung der Welle 5 mit einer Axialkraft F zwischen dem zweiten Flächenabschnitt 28c und der Anlauffläche 12 ein Spalt 34 ausgebildet ist. Das bedeutet, dass bei einer relativ geringen Axialkraft F lediglich das erste Teilelement 31 mit seinem ersten Flächenabschnitt 27c in Wirkverbindung mit der Anlauffläche 12 ist.

Die Anlauffläche 12 des Elements 20d gemäß der Fig. 6 bildet insgesamt drei Flächenabschnitte 27d, 28d und 35 aus. Die Ausbildung des Elements 20d basiert im Wesentlichen auf dem Element 20c, wobei eine zweite radial umlaufende Vertiefung 36 vorgesehen ist, die die erste Vertiefung 33 konzentrisch umgibt. Der dritte Flächenabschnitt 35 weist gegenüber dem zweiten Flächenabschnitt 28d einen größeren Abstand zum Endabschnitt 14 der Welle 5 auf. Bei einer Beaufschlagung der Welle 5 mit einer Axialkraft F gelangen somit bei steigender Axialkraft F die Flächenabschnitte 27d, 28d und 35 sukzessive in Wirkverbindung mit der Anlauffläche 12 und erzeugen jeweils zusätzliche Hemmmomente M_{H}, die einer Drehung der Welle 5 entgegenwirken.

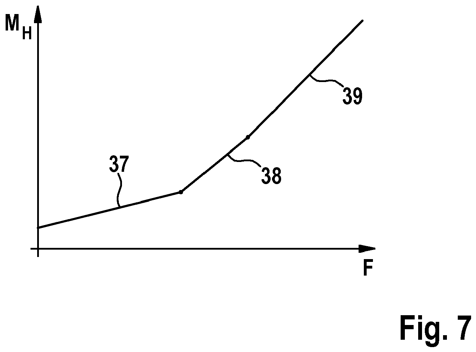

Dieser Zusammenhang ist in der Fig. 7 dargestellt, bei der das Hemmmoment M_{H} über der Axialkraft F bei dem Element 20d dargestellt ist. Der Kurvenverlauf zeigt drei Bereiche 37 bis 39, die jeweils in etwa linear verlaufen, wobei die Steigung des Bereichs 38 größer ist als der des Bereichs 37, und die Steigung des Bereichs 39 wiederum größer als die des Bereichs 38. Der Bereich 37 kennzeichnet den Zustand bzw. die Axialkraft F, bei denen lediglich der erste Flächenabschnitt 27d in Wirkverbindung mit der Welle 5 angeordnet ist. Bei einer Erhöhung der Axialkraft F gelangt der zweite Flächenabschnitt 28d in Wirkverbindung mit dem Endabschnitt 14, woraus sich die größere Steigung im Bereich 38 ergibt. Zuletzt gelangt, bei einer weiteren Erhöhung der Axialkraft F, auch der dritte Flächenabschnitt 35 in Wirkverbindung mit dem Endabschnitt 14. Dies wird durch den Bereich 39 verdeutlicht.

Die soweit beschriebene Wellenanlaufanordnung kann in vielfältiger Art und Weise abgewandet bzw. modifiziert werden ohne vom Erfindungsgedanken abzuweichen. Insbesondere kann es vorgesehen sein, das nicht nur in dem einen Endbereich der Welle 5 eine erfindungsgemäße Wellenanlaufanordnung vorgesehen ist, sondern auch an dem anderen Endbereich der Welle 5. An diesem anderen Endbereich ist die Welle 5 dann üblicherweise in einem dritten Lager, dem sogenannten "C-Lager" aufgenommen. Dadurch wird, unabhängig von der Drehrichtung der Welle 5, ein mit zunehmender Axialkraft F progressiv zunehmendes Hemmmoment M_{H} erzeugt. Ferner wird erwähnt, dass die Erfindung im Rahmen eines Fensterheberantriebs erläutert wurde. Selbstverständlich sind auch beliebige andere Anwendungen, insbesondere in Komfortantrieben von Kraftfahrzeugen, wie Schiebedachantrieben, Sitzverstellungsantrieben oder ähnlichem denkbar.

## Patentansprüche

1. Wellenanlaufanordnung, insbesondere für einen Stellantrieb (1) in einem Kraftfahrzeug, umfassend eine drehbar gelagerte Welle (5; 5b) und eine Anlauffläche (12) zum axialen Abstützen eines Wellenendes (14; 14b), wobei
die Größe der Anlauffläche (12) in Abhängigkeit von der über das Wellenende (14; 14b) auf die Anlauffläche (12) wirkenden Axialkraft (F) veränderbar ist, derart, dass eine Erhöhung der Axialkraft (F) eine Vergrößerung der Anlauffläche (12) bewirkt, wobei die Anlauffläche (12) an einem elastisch deformierbaren Element (20; 20a bis 20d) ausgebildet ist, das in einer Aufnahme (21) für das Element (20; 20a bis 20d) aufgenommen ist, und das sich in der Aufnahme (21) axial abstützt, **dadurch gekennzeichnet, dass** das Element (20) zumindest im Wesentlichen scheibenförmig ausgebildet und eine in der Längsachse (17) angeordnete, plateauartige Erhöhung (22) als Anlauffläche (12) aufweist, an der die Welle (5) anliegt, wobei die Erhöhung (22) konzentrisch zur Längsachse (17) von einer radial umlaufenden Sicke (23) umgeben ist, in deren Bereich das Element (20) eine verringerte Dicke aufweist.

2. Wellenanlaufanordnung nach Anspruch 1,
**dadurch gekennzeichnet**, die Anlauffläche (12) konzentrisch zu der Längsachse (17) der Welle (5; 5b) angeordnet ist und erste und zweite Flächenabschnitte (27; 27b; 27c; 27d, 28; 28b; 28c; 28d) aufweist, die kreis- und/oder ringförmig ausgebildet sind, **die** durch Erhöhung der Axialkraft (F) zwischen dem Element (20; 20a bis 20d) und dem Wellenende (14) ausgebildet werden.

3. Wellenanlaufanordnung nach Anspruch 1 oder 2,
**dadurch gekennzeichnet,**
**dass** die Sicke (23) zur Sicherstellung der gewünschten Deformationsfähigkeit des Elements (20) dient, und gegebenenfalls zusätzlich zur Aufnahme für ein Schmiermittel, insbesondere Fett.

4. Wellenanlaufanordnung nach Anspruch 2,
**dadurch gekennzeichnet,**
**dass** die Abstände zwischen den Flächenabschnitten (27; 27b; 27c; 27d, 28; 28b; 28c; 28d) der Anlauffläche (12) und dem Wellenende (14) zumindest bei mit Axialkraft (F) unbelasteter Welle (5; 5b) unterschiedlich groß sind, und dass sich die Abstände bei einer Erhöhung der Axialkraft (F) auf die Welle (5; 5b) verringern.

5. Wellenanlaufanordnung nach Anspruch 4,
**dadurch gekennzeichnet,**
**dass** das Element (20; 20a bis 20d) auf der dem Wellenende (14) zugewandten Seite einen ersten Flächenabschnitt (27; 27b; 27c; 27d) aufweist, der radial von wenigstens einem zweiten Flächenabschnitt (28; 28b; 28c; 28d, 35) umgeben ist.

6. Wellenanlaufanordnung nach Anspruch 5,
**dadurch gekennzeichnet,**
**dass** der Abstand des ersten Flächenabschnitts (27; 27b; 27c; 27d) zum Wellenende (14) bei mit Axialkraft (F) unbelasteter Welle (5; 5b) geringer ist als der Abstand des wenigstens einen zweiten Flächenabschnitts (28; 28b; 28c; 28d, 35) zum Wellenende (14).

7. Wellenanlaufanordnung nach einem der Ansprüche 1 bis 6,
**dadurch gekennzeichnet,**
**dass** das Element (20c; 20d) zweiteilig ausgebildet ist und ein in der Längsachse (17) der Welle (5) angeordnetes zentrales, insbesondere stiftförmiges erstes Teilelement (31) aufweist, das aus einem anderen Material besteht als das das erste Teilelement (31) umgebende zweite Teilelement (32).

8. Wellenanlaufanordnung nach Anspruch 7,
**dadurch gekennzeichnet,**
**dass** das erste Teilelement (31) auf der dem Wellenende (14) abgewandten Seite zum Grund der Aufnahme (21) beabstandet angeordnet ist, und dass das erste Teilelement (31) bei Überschreitung einer bestimmten Axialkraft (F) auf die Welle (5) in Anlage mit dem Grund der Aufnahme (21) gelangt.

9. Wellenanlaufanordnung nach einem der Ansprüche 1 bis 8,
**dadurch gekennzeichnet,**
**dass** das Element (20; 20a bis 20d) in einem zentralen Bereich des Elements (20; 20a bis 20d) zumindest bei mit Axialkraft (F) unbelasteter Welle (5; 5b) zum Grund der Aufnahme (21) beabstandet angeordnet ist.

10. Stellantrieb (1), insbesondere in einem Kraftfahrzeug, mit einer Wellenanlaufanordnung nach einem der vorhergehenden Ansprüche, bei dem die Welle (5; 5b) eine abschnittsweise als Getriebeschnecke (7) ausgebildete Ankerwelle eines elektrischen, insbesondere drehrichtungumkehrbaren Antriebsmotors (3) ist.

## Claims

1. Shaft thrust support arrangement, in particular for an actuating drive (1) in a motor vehicle, comprising a rotatably mounted shaft (5; 5b) and a thrust surface (12) for axially supporting a shaft end (14; 14b), wherein
the size of the thrust surface (12) is variable in a manner dependent on the axial force (F) acting on the thrust surface (12) via the shaft end (14; 14b), such that an increase of the axial force (F) effects an enlargement of the thrust surface (12), wherein the thrust surface (12) is formed on an elastically deformable element (20; 20a to 20d) which is received in a receptacle (21) for the element (20; 20a to 20d) and which is supported axially in the receptacle (21), **characterized in that** the element (20) is of at least substantially disc-shaped form and has a plateau-like elevation (22), arranged in the longitudinal axis (17), as thrust surface (12), against which the shaft (5) bears, wherein the elevation (22) is surrounded, concentrically with respect to the longitudinal axis (17), by a radially encircling depression (23), in the region of which the element (20) has a reduced thickness.

2. Shaft thrust support arrangement according to Claim 1,
**characterized in that** the thrust surface (12) is arranged concentrically with respect to the longitudinal axis (17) of the shaft (5; 5b) and has first and second surface sections (27; 27b; 27c; 27d, 28; 28b; 28c; 28d) which are of circular and/or ring-shaped form and which are formed between the element (20; 20a to 20d) and the shaft end (14) as a result of an increase of the axial force (F).

3. Shaft thrust support arrangement according to Claim 1 or 2,
**characterized**
**in that** the depression (23) serves for ensuring the desired deformation capability of the element (20), and if appropriate additionally for receiving a lubricant, in particular grease.

4. Shaft thrust support arrangement according to Claim 2,
**characterized**
**in that** the spacings between the surface sections (27; 27b; 27c; 27d, 28; 28b; 28c; 28d) of the thrust surface (12) and the shaft end (14) are of different sizes at least in the case of a shaft (5; 5b) not subjected to axial force (F), and in that the spacings decrease in the event of an increase of the axial force (F) on the shaft (5; 5b).

5. Shaft thrust support arrangement according to Claim 4,
**characterized**
**in that** the element (20; 20a to 20d) has, on the side facing toward the shaft end (14), a first surface section (27; 27b; 27c; 27d) which is radially surrounded by at least one second surface section (28; 28b; 28c; 28d, 35).

6. Shaft thrust support arrangement according to Claim 5,
**characterized**
**in that**, in the case of a shaft (5; 5b) not subjected to axial force (F), the spacing of the first surface section (27; 27b; 27c; 27d) to the shaft end (14) is smaller than the spacing of the at least one second surface section (28; 28b; 28c; 28d, 35) to the shaft end (14).

7. Shaft thrust support arrangement according to one of Claims 1 to 6,
**characterized**
**in that** the element (20c; 20d) is of two-part form and has a central, in particular pin-like first partial element (31) which is arranged in the longitudinal axis (17) of the shaft (5) and which is composed of a different material than the second partial element (32) surrounding the first partial element (31).

8. Shaft thrust support arrangement according to Claim 7,
**characterized**
**in that** the first partial element (31) is, on the side averted from the shaft end (14), arranged so as to be spaced apart from the base of the receptacle (21), and in that the first partial element (31) comes into contact with the base of the receptacle (21) in the event of an exceedance of a particular axial force (F) on the shaft (5).

9. Shaft thrust support arrangement according to one of claims 1 to 8,
**characterized**
**in that** the element (20; 20a to 20d) is, in a central region of the element (20; 20a to 20d), arranged so as to be spaced apart from the base of the receptacle (21) at least in the case of a shaft (5; 5b) not subjected to axial force (F).

10. Actuating drive (1), in particular in a motor vehicle, having a shaft thrust support arrangement according to one of the preceding claims, in which the shaft (5; 5b) is an armature shaft, formed in sections as a gear worm (7), of an electric drive motor (3) which is in particular reversible in terms of direction of rotation.

## Revendications

1. Ensemble d'entraînement d'arbre, en particulier pour un entraînement de réglage (1) d'un véhicule automobile, comportant un arbre (5; 5b) monté à rotation et une surface d'entraînement (12) qui soutient axialement une extrémité (14, 14b) de l'arbre,
la taille de la surface d'entraînement (12) pouvant être modifiée en fonction de la force axiale (F) qui agit sur la surface d'entraînement (12) par l'intermédiaire de l'extrémité (14, 14b) de l'arbre de telle sorte qu'une augmentation de la force axiale (F) entraîne un agrandissement de la surface d'entraînement (12), la surface d'entraînement (12) étant formée sur un élément (20; 20a à 20d) élastiquement déformable, repris dans un logement (21) prévu pour l'élément (20; 20a à 20d) et soutenu axialement dans le logement (21), **caractérisé en ce que**
l'élément (20) est configuré essentiellement en forme de disque et présente comme surface d'entraînement (12) un rehaussement (22) en forme de plateau disposé dans l'axe longitudinal (17), le rehaussement (22) étant entouré concentriquement par rapport à l'axe longitudinal (17) par une moulure radiale périphérique (23) au niveau de laquelle l'élément (20) présente une épaisseur réduite.

2. Ensemble d'entraînement d'arbre selon la revendication 1, **caractérisé en ce que** la surface d'entraînement (12) est disposée concentriquement par rapport à l'axe longitudinal (17) de l'arbre (5; 5b) et présente des premières et des deuxièmes sections de surface (27; 27b; 27c; 27d, 28; 28b; 28c; 28d) de forme circulaire et/ou annulaire formées par l'augmentation de la force axiale (F) agissant entre l'élément (20; 20a à 20d) et l'extrémité (14) de l'arbre.

3. Ensemble d'entraînement d'arbre selon les revendications 1 ou 2, **caractérisé en ce que** la moulure (23) sert à assurer la déformabilité souhaitée de l'élément (20) et éventuellement à reprendre en supplément un lubrifiant et en particulier une graisse.

4. Ensemble d'entraînement d'arbre selon la revendication 2, **caractérisé en ce qu'**au moins lorsque l'arbre (5; 5b) n'est pas sollicité par la force axiale (F), les distances entre les sections de surface (27; 27b; 27c; 27d, 28; 28b; 28c; 28d) de la surface d'entraînement (12) et l'extrémité (14) de l'arbre ont des valeurs différentes et **en ce que** les distances se réduisent lorsque la force axiale (F) exercée sur l'arbre (5; 5b) augmente.

5. Ensemble d'entraînement d'arbre selon la revendication 4, **caractérisé en ce que** sur le côté tourné vers la extrémité (14, 14b) de l'arbre, l'élément (20; 20a à 20d) présente une première section de surface (27; 27b; 27c; 27d) entourée radialement par au moins une deuxième section de surface (28; 28b; 28c; 28d, 35).

6. Ensemble d'entraînement d'arbre selon la revendication 5, **caractérisé en ce que** lorsque l'arbre (5; 5b) n'est pas sollicité par la force axiale (F), la distance entre la première section de surface (27; 27b; 27c; 27d) et l'extrémité (14, 14b) de l'arbre est plus petite que la distance entre la ou les deuxièmes sections de surface (28; 28b; 28c; 28d, 35) et l'extrémité (14, 14b) de l'arbre.

7. Ensemble d'entraînement d'arbre selon l'une des revendications 1 à 6, **caractérisé en ce que** l'élément (20c; 20d) est réalisé en deux pièces et présente un premier élément partiel (31) en forme de tige disposé au centre, en particulier en forme de tige, disposé au centre de l'axe longitudinal (17) de l'arbre (5) et constitué d'un autre matériau que le deuxième élément partiel (32) qui entoure le premier élément partiel (31).

8. Ensemble d'entraînement d'arbre selon la revendication 7, **caractérisé en ce que** le premier élément partiel (31) est disposé sur le côté non tourné vers l'extrémité (14, 14b) de l'arbre, à distance du fond du logement (21) et **en ce que** le premier élément partiel (31) vient se placer dans le fond du logement (21) lorsque la force axiale (F) appliquée sur l'arbre (5) dépasse une valeur définie.

9. Ensemble d'entraînement d'arbre selon l'une des revendications 1 à 8, **caractérisé en ce qu'**au moins lorsqu'une force axiale (F) n'est pas appliquée sur l'arbre (5; 5b), l'élément (20; 20a à 20d) est disposé à distance du fond du logement (21) dans une partie centrale de l'élément (20; 20a à 20d).

10. Entraînement de réglage (1), en particulier dans un véhicule automobile, présentant un ensemble d'entraînement d'arbre selon l'une des revendications précédentes, et dans lequel l'arbre (5; 5b) est l'arbre d'induit, dont certaines parties sont configurées comme vis de transmission (7), d'un moteur d'entraînement électrique (3), en particulier un moteur électrique dont le sens de rotation peut être inversé.
